# EUROPEAN PATENT APPLICATION

(11) **EP 0 862 324 A2**
(43) Date of publication of application: **02.09.1998**
(21) Application number: 98301397.0
(22) Date of filing: 25.02.1998
(51) Int. Cl.: H04N 5/44

(54) **Full resolution, non-artifact presentation of interlaced high resolution video imagery on a progressive-scan display**

(30) Priority: 28.02.1997 US 808300
(71) Applicant: Lockheed Martin Corporation, Grand Prairie, Texas 75051 (US)
(72) Inventor: Smith, Lilburn R., Weatherford, Texas (US); Burslem, Jeffrey G., Grand Prairie, Texas (US)
(74) Representative: Hackney, Nigel John

(57) **Abstract**

A method for displaying interlaced, video imagery on a progressive scan display device is disclosed. More particularly, the method includes interleaving black line data with at least one of a first set and a second set of interlaced video data; displaying the first set of interlaced video data while buffering the second set of interlaced video data; displaying the second set of interlaced video data; and displaying the black line data with the set of interlaced video data with which it is interleaved.

## Description

This invention pertains to displaying video imagery on a progressive-scan display and, more particularly, the display of interlaced video imagery on such a device.

Video imagery displayed in the United States traditionally has been acquired, transmitted, and displayed according to U.S. television broadcast standards commonly referred to as the "NTSC" standard. NTSC formatted video imagery is described as "interlaced," and an NTSC standard video signal is designed for display on an "interlaced" display device. This standard was designed to acceptably display an image at the time the standard was promulgated many years ago. Perhaps the best known interlaced display device is the traditional television set, but interlaced display devices have many other applications and may be found wherever video imagery is displayed.

Interlaced display devices conventionally incorporate a cathode ray tube (CRT) as the display device. A CRT typically includes a coated screen and a "gun" that shoots electrically charged particles at individual "pixels" coating the screen. To display an image at an elemental level, the gun shoots the particles at the atoms in a particular pattern to excite predetermined pixels. The atoms, when excited, emit light in proportion to the amount of electric charge the particle carries. The atoms emit light until they fade back to their original unexcited state. This fading is known as "phosphor decay" and the ability of the monitor phosphor luminance to resist decay over time is called "persistence." Thus, in a black and white video system, unexcited atoms are displayed as black, highly excited atoms are displayed as white, and moderately excited atoms are displayed as gray. Color systems work in a similar manner using combinations of red, blue, and green and sometimes other color sets.

A single video image in an interlaced system is generally referred to as a "frame." For display purposes, the NTSC, or interlaced, system divides a single frame into 480 lines of 640 pixels. A properly registered interlaced frame traditionally comprises two independent "field" images as described more fully below, each being potentially spatially and/or temporally offset one from another. In practice, the odd field of the frame is composed of "active" video data from the odd lines of the frame and the even field is composed of active video data from the even lines of the frame. Each field is displayed every 1/60 seconds (*i.e.,* at 60 Hz) for a monochrome display, quickly enough so that the viewer will not notice they are, in actuality, seeing two separate images interleaved with each other. Thus, the entire frame is completely displayed every 1/30 seconds (*i.e.,* at 30 Hz). Again, color systems operate in a similar fashion but display at a rate of approximately 59.94 Hz/field.

Each line of each field image is displayed from left to right and the field as a whole is displayed line-by-line, skipping every other line of the frame, from the top to the bottom of the display. The time period between the display of active lines during which the CRT gun repositions to display the next active line is known as the horizontal blanking period. The time period between the display of the last active line of one field and the first active line of the next field is known as the vertical blanking period. These blanking periods contain horizontal synchronization ("Hsync") and vertical synchronization ("Vsync") data respectively. The CRT gun receives Hsync and Vsync data along with active video data to coordinate display of the active data in the frame.

The even field image is registered on the even-numbered display lines of the display device, immediately followed by the odd field image being registered on the odd-numbered display lines of the display device. The video data comprising a line in a field being displayed is known as "active" video data and the lines excluded from the field being displayed are known as "inactive" lines. Thus, the CRT gun shoots particles at the pixels on each line according to the active video data from the respective field that it receives line by line while tracing every other one of the 480 lines in the display and then displays the next field in the same manner.

Multiple video images can be displayed in this manner by displaying a continuous sequence of independent even and odd field images over time. The even/odd field scanning of interlaced video on a CRT display device provides the illusion of the displayed image being continuously available to the viewer. In addition, the continuous phosphor decay is leveraged to prohibit the perception of image artifacts resulting from photographed objects in motion being displayed at two different positions concurrently.

For the case of interlaced video imagery, field image data is optimally presented on the display at the same rate and in the same sequence that it was originally acquired by the video camera. However, modern displays used in the desktop computer industry are designed to exploit the higher performance levels of contemporary technology. Video bandwidths available today permit transmission and rendering of full frames of greater than 640 x 480 pixel resolution video at frame rates of 60 Hz or greater without interlacing. This permits use of a simpler methodology known as "progressive scan" display.

A progressive scan display device displays every line of each frame, as opposed to each field in an interlaced system, from left to right by line and line-by-line from the top to the bottom of the display. Thus, the gun traverses every line in the display every pass in a progressive scan system rather than just every other line as would be the case in an interlaced system. Most new flat-panel display devices such as liquid crystal displays are progressive scan display devices as well as some of the newer CRT display devices.

The use of CRT displays with their inherent phosphor decay allows imagery to be strobed one frame at a time, permitting an optical illusion of perceived image motion not unlike that produced by a motion-picture projector. This works very well for static or near-static imagery. However, most common existing computer video imagery systems and applications do not yet provide the capability to sustain full resolution, high dynamic range real-time camera video at a frame rate of near 60 Hz. Also, these advances have not been universally applied to the function of state-of-the-art high-resolution video systems. Implementation of interlaced video imagery on progressive scan displays presents challenges, and each of the classical solutions presents shortcomings.

One approach to displaying interlaced video imagery on a progressive scan display duplicates each line of interlaced active video data from the respective frame into each of the designated line and an adjacent "black" line on the progressive scan display. By this method, the display image resolution is never better than that of a source field image, and is only half of that of the full source image frame. Also, this results in an adverse spatial distortion in that elements captured by the camera as single pixels are doubled vertically. In addition, if both of the even and odd field images are handled this way, image fidelity is potentially reduced by superimposing two spatially separated pixel samples at the camera (one from the even field sample and one from the odd field) over the same two-pixel line stack. The spatial distinction between the two original field samples is compromised, and the dynamic range is reduced at that point due to the viewer's perception resulting in a filtering of the two sampled levels to a mid-range level. If only one of the source field images is used and the other is discarded this protects the dynamic range of the image at the expense of discarding half of the acquired image information. This would result in a spatially distorted, half-resolution frame image with a noticeable flicker caused by the slow image refresh rate.

A second approach interpolates scan lines. Scan line interpolation goes a step beyond scan line duplication, to interpolate the video data contained in the two adjacent active video lines to generate video data for use in the intermediate inactive video line. Most of the problems with scan line duplication apply here also, and for high resolution, high dynamic range video, the interpolation would result in a muddy, filtered, and inaccurate representation of the source imagery.

Still another approach is field merging. By this, two consecutive interlaced fields of data are stored and sent to the display as a single progressive scan video frame. Thus, a pair of input fields is merged to generate a new output frame. Full resolution is provided, and this approach presents no problems in the display of static images. However, motion artifacts will result if either the source camera is panned or items within the scene are in motion. Since the two field images were captured at two different points in time, the field merging results in a fuzzy, distorted image where motion exists, or at worst case double images if the object(s) are narrow and the rate of motion is sufficiently fast. The process is particularly vulnerable to horizontal motion.

The art consequently needs a new technique for displaying interlaced video imagery on progressive scan display devices. The new technique ideally would identically and precisely reproduce the original video image. Thus, the new technique should present the image with substantially full resolution, with reduced spatial distortion, and with reduced compromise in dynamic range. Similarly, the new technique should display video imagery without artifacts and without flicker.

The invention is a method for displaying video imagery including video data and black line data on a progressive scan display device. More particularly, the method comprises interleaving black line data with at least one of a first set and a second set of interlaced video data; displaying the first set of interlaced video data while buffering the second set of interlaced video data; displaying the second set of interlaced video data; and displaying the black line data with the set of interlaced video data with which it is interleaved.

A more particular description of the invention briefly summarized above is set forth below by way of particular embodiments disclosed in the drawings of this specification and as described in connection therewith. The drawings nevertheless illustrate only typical, particular embodiments of the invention and are not to be considered limiting thereon as the invention may admit to other equally effective embodiments. In the drawings:
Figure 1 diagrams the method of the present invention;
Figure 2 diagrams one particular embodiment of the method diagrammed in Figure 1;
Figure 3 schematically illustrates a particular hardware design with which the particular embodiment of Figure 2 may be implemented;
Figures 3A-3G schematically illustrate components of the particular hardware design in Figure 3;
Figures 4A-J are timing diagrams related to signals generated and output by various components of the particular hardware design in Figure 3; and
Figure 5 is a table of signals generated by the power conditioning module in Figure 3.

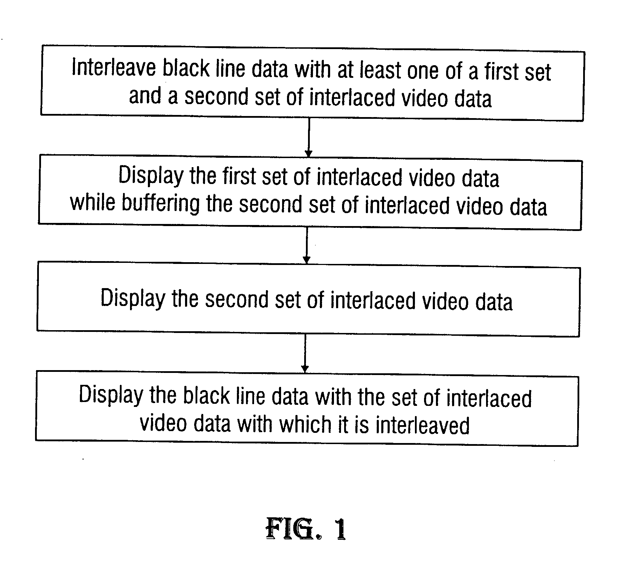

The invention is a method for displaying video imagery including video data and black line data on a progressive scan display as is diagrammed in Figure 1. The method generally comprises interleaving black line data with at least one of a first set and a second set of interlaced video data; displaying the first set of interlaced video data while buffering the second set of interlaced video data; displaying the second set of interlaced video data; and displaying the black line data with the set of interlaced video data with which it is interleaved. A "set" of data may be either a line or a field of video data. These steps are then repeated to display an image.

However, the invention is capable of implementation in many embodiments. For instance, the method of Figure 1 will display only a single image, but may be iterated to display a single image in a continuous loop or to display multiple video images. Similarly, the progressive scan display device may be any one of a liquid crystal display ("LCD"), an electro-luminescent display, or an AC plasma display, or any other kind of progressive scan display. Still other embodiments are possible. The second set, and preferably the first set, are buffered before display. Even the first set must be buffered using state of the art technology just as the second set must be, but this may not always be so depending on advances in the state of the art.

More importantly, as one of ordinary skill in the art having the benefit of this disclosure will realize, video data may be buffered "by line" or "by field." As will be appreciated by those of ordinary skill in the art, display video data is typically handled on a line by line basis. However, a group of lines may be collectively handled as a field. As used herein, the term "by line" shall be used in distinction to "by field." "By line" shall refer to a single line of video data being processed whereas the phrase "by field" shall refer to a group of such lines handled collectively on a line by line basis. The choice of whether to buffer by line or by field may be dictated by design constraints and will involve tradeoffs between memory size and throughput.

Other design choices may yield other alternatives. For instance, black line data may be stored before video imagery is acquired and may be stored on a pixel, line, or field basis. Storing only a single pixel of black line data utilizes memory more efficiently than storing a full field but requires highly flexible memory accessing methods. Thus, whether a particular embodiment stores a pixel, line, or field of black line data will depend upon design constraints such as memory availability, timing requirements, and system architecture.

Another such variation turns on interleaving the black line data with the active video data. For instance, black line data can be interleaved with the active video data such that the black line data and the video data are buffered together. This embodiment can subsequently output display data to the display device using direct memory access techniques. Alternatively, the video data can be buffered and then interleaved with the black line data when output to the display device. The black line data is consequently interleaved with the video data as the video data is being displayed.

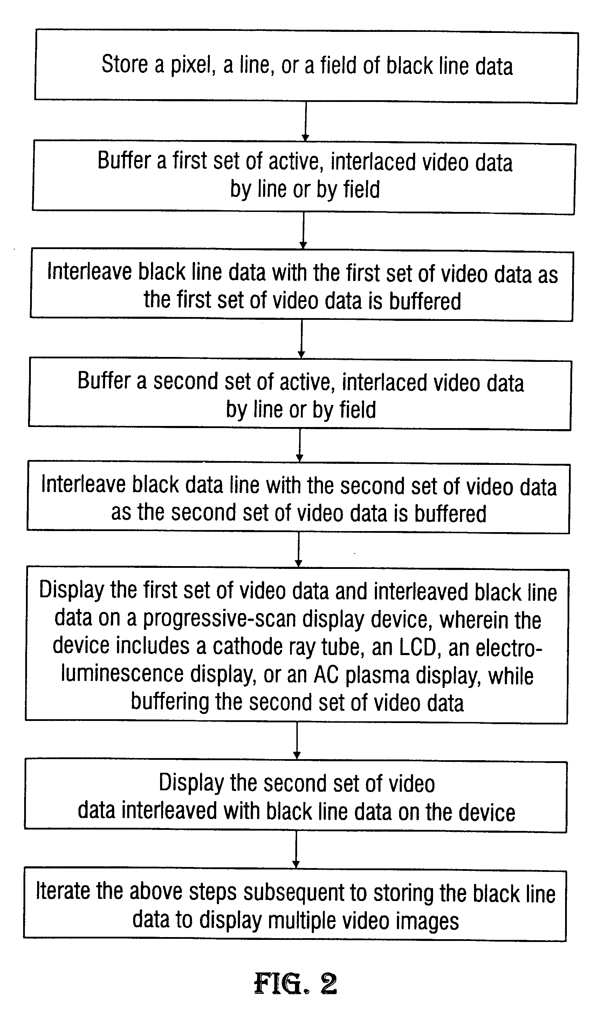

One particular embodiment of the method diagrammed in Figure 1 is diagrammed in Figure 2. As diagrammed, black line data is stored in any one of a pixel, a line, and a field. A first field of active, interlaced video data is buffered by line or by field and black line data is interleaved with the video data as the video data is buffered. A second field of active, interlaced video data is then buffered and black line data is interleaved with the video data as it is buffered. While the second field of video data is being buffered along with the interleaved black line data, the first field of video data and the black line data interleaved therewith is displayed. The second field of video data and its interleaved black line data is then displayed. These steps are iterated to display multiple video images, with a new field of video data being buffered while a previously buffered field is displayed along with interleaved black line data. As one of ordinary skill in the art having the benefit of this disclosure will realize, appropriate timing and display control signals must be employed during the iteration to correctly display the successive images even though such is not shown in Figure 2.

The invention as diagrammed in Figure 1 and in Figure 2 assumes the video data has been suitably processed for display in accordance therewith. However, the hardware utilized for such processing may take many forms, some of which may effect particular variations in the method of claim 1. Thus, as discussed below, this invention may be implemented in many embodiments.

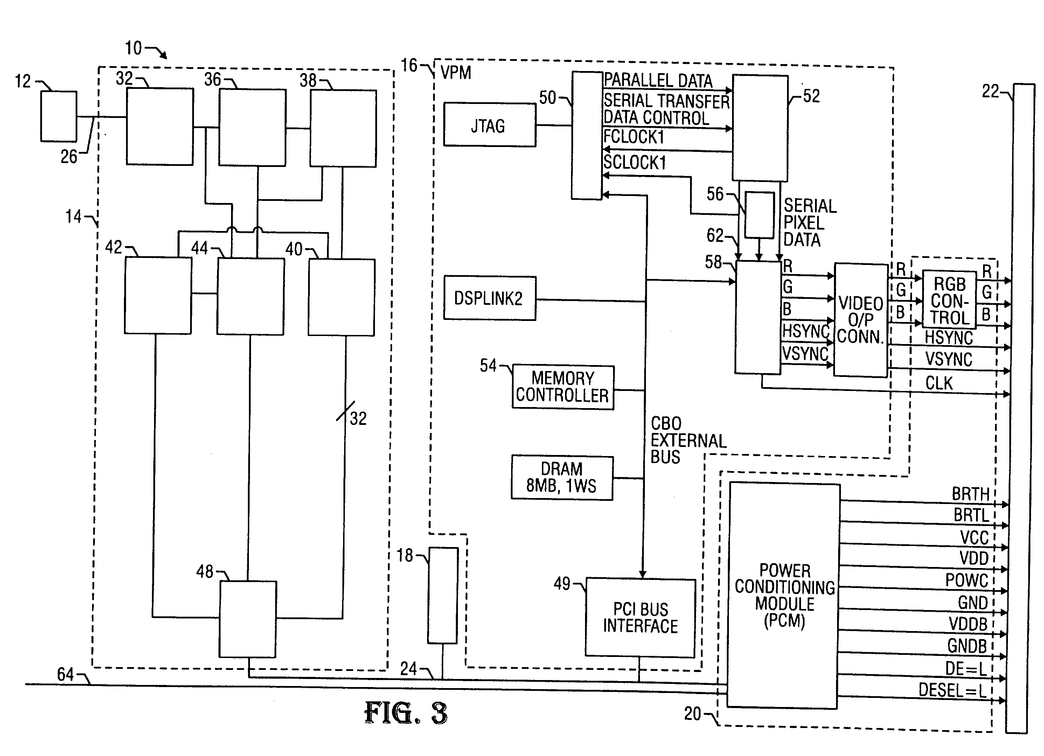

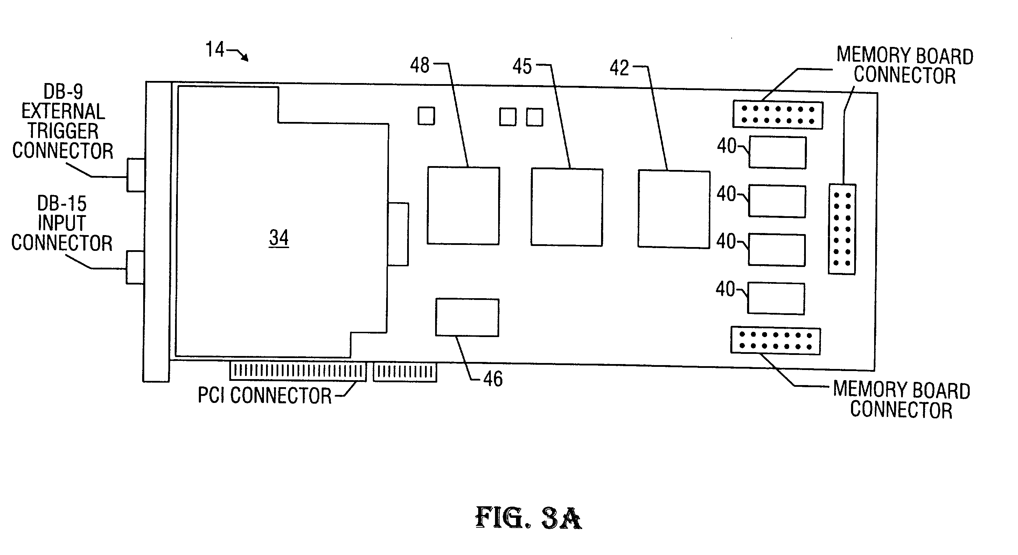

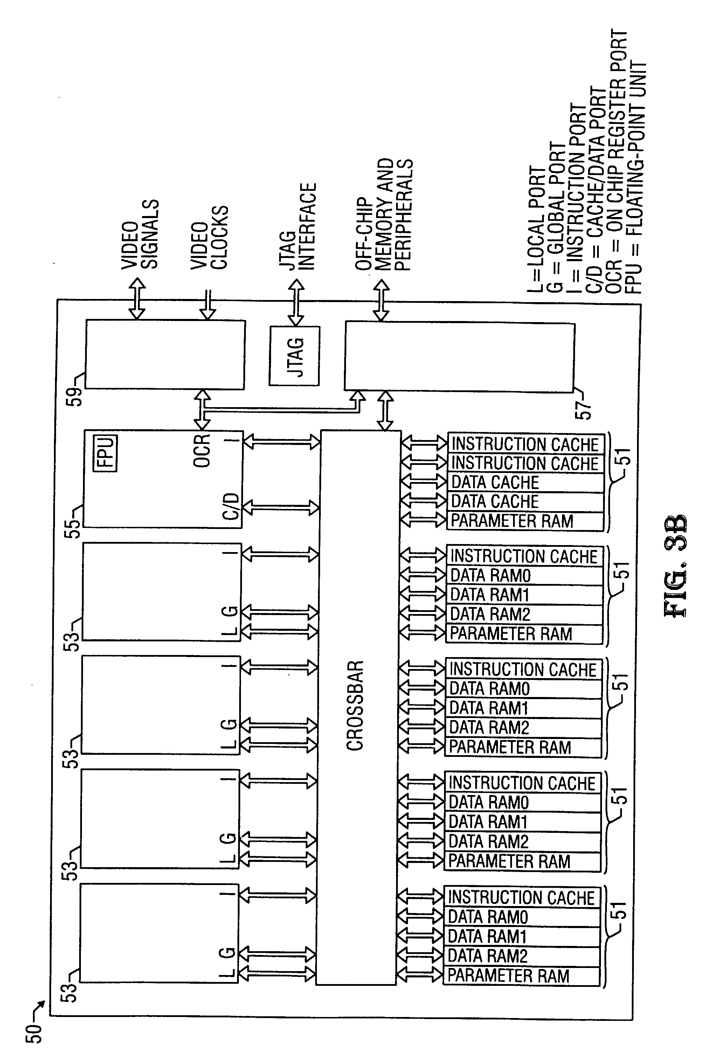

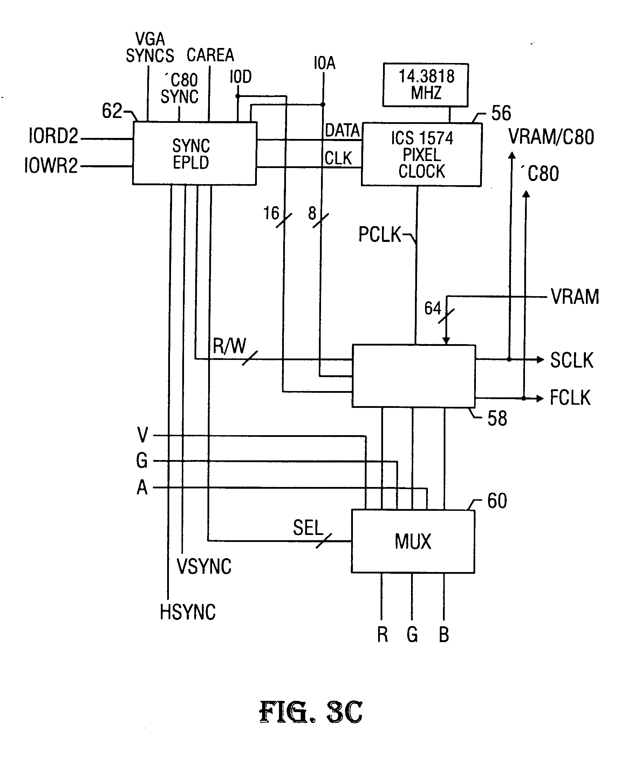

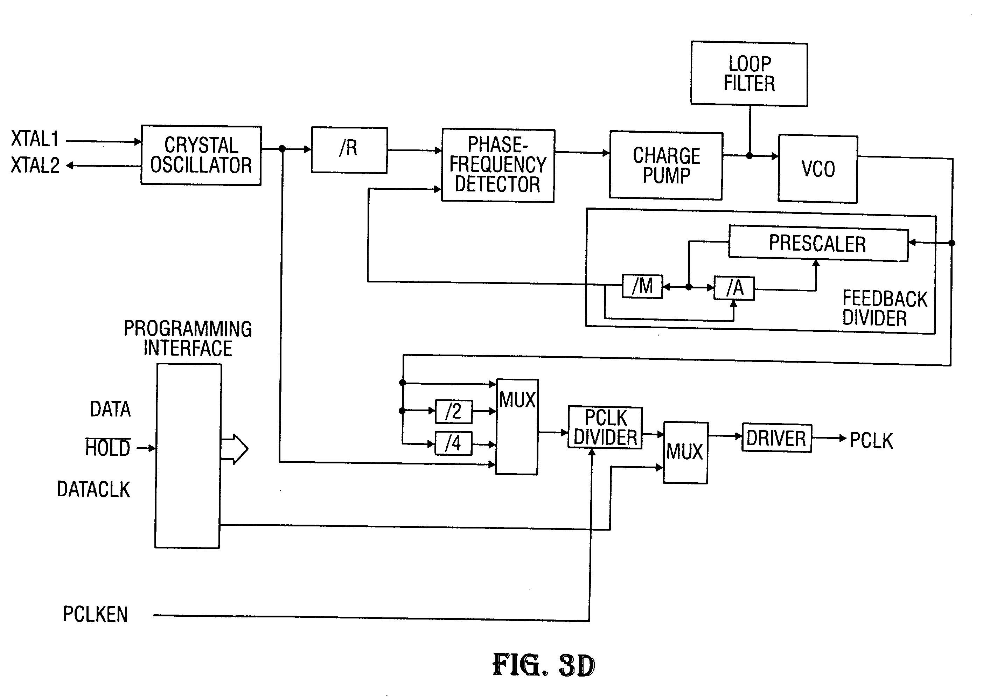

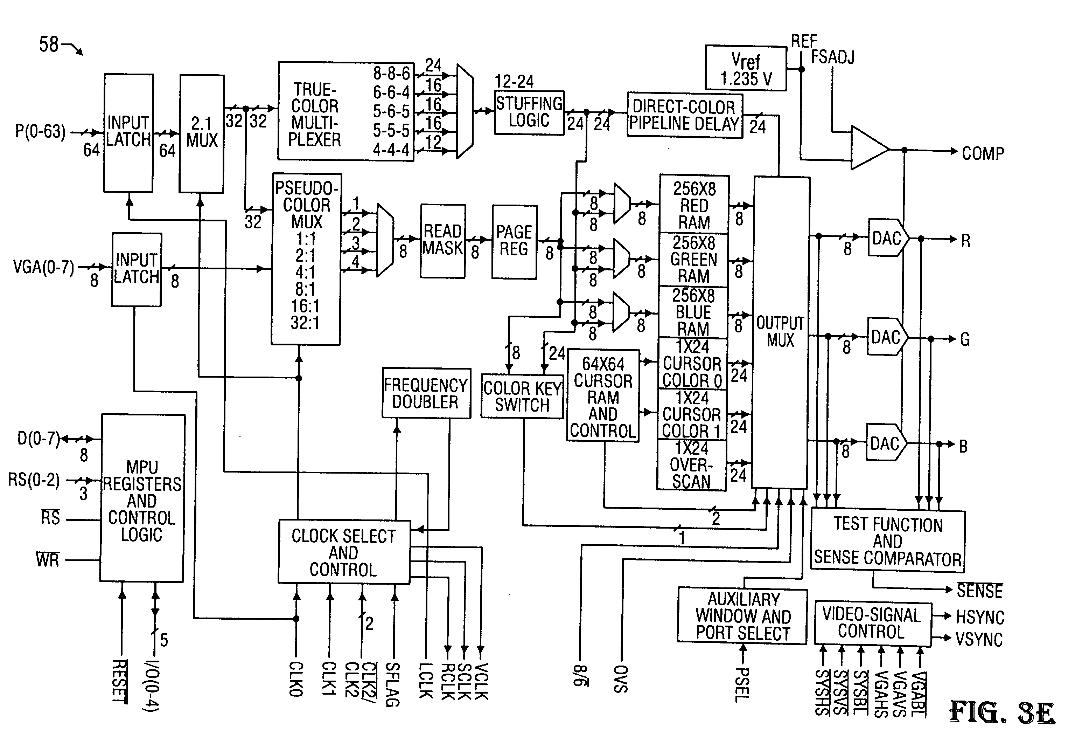

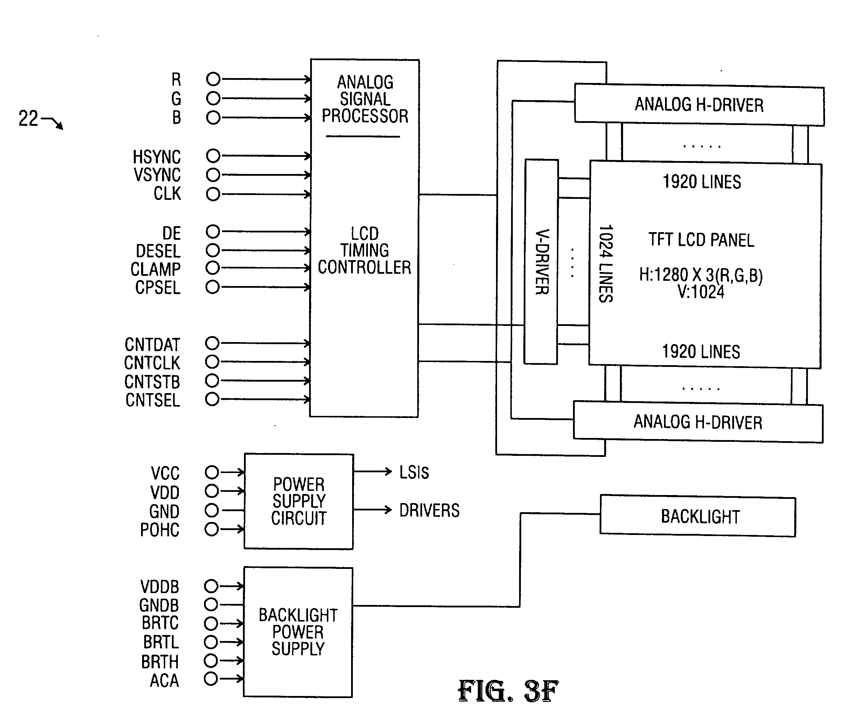

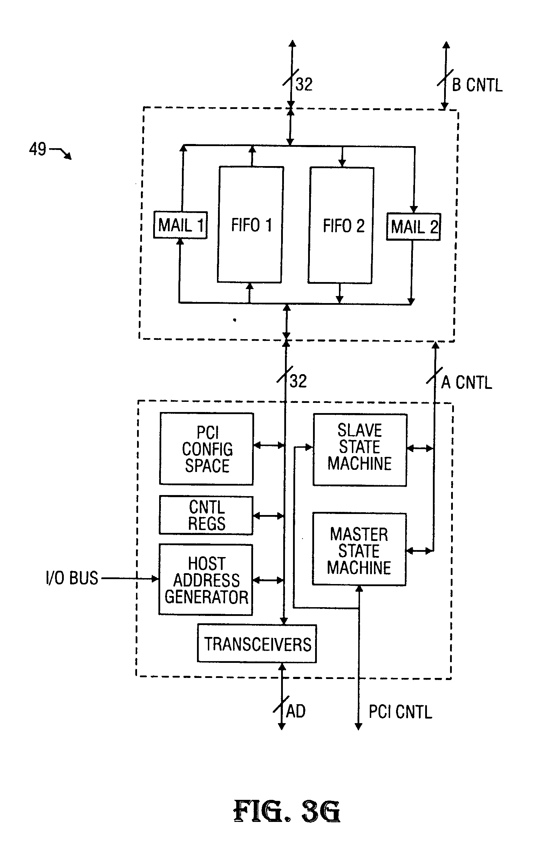

Figure 3 schematically illustrates a particular hardware design 10 with which the invention may be implemented. Although not a part of the invention, the video imagery input must be acquired. Hardware design 10 in Figure 3 includes video source 12 that performs this function. More particularly, video source 12 is preferably a high resolution, forward-looking, infrared ("FLIR") camera but may be any conceivable type of video source. As one of ordinary skill in the art having the benefits of this disclosure will realize, some video sources provide video imagery in digital form while others provide imagery in analog form. If video source 12 provides video imagery in analog form, then hardware design 10 must perform an analog to digital conversion. Conversely, if video source 12 provides digital video imagery, then hardware design 10 can omit the conversion. As it happens, if video source 12 is the preferred FLIR camera, the video imagery data input on line 26 will be analog.

Hardware design 10 principally, from the standpoint of the invention, comprises video acquisition module 14, video processing module 16, processor motherboard 18, power conditioning module 20, and progressive-scan display device 22. Video acquisition module 14, video processing module 16, and processor motherboard 18 all interface via PCI bus 24. Video source 12, as mentioned above, provides video imagery input to hardware design 10 via video input line 26.

Still referring to Figure 3, video acquisition module 14 is preferably a medium speed ("MM") video acquisition module from the PDI Analog Series High Performance Analog Video acquisition modules (PDI Part No. SA5N17009). This particular component is available from Precision Digital Images Corporation ("PDI") located at 6742 185th Avenue NE, Suite 100, Redmond, Washington 98052. PDI can be contacted by phone at 800-678-6505, by facsimile transmission at 206-867-9177, and over the World-Wide Web at http://www.precisionimages.com. This particular product may be used in either DOS-based or Windows^{®}-based platforms although special drivers may be necessary in some applications.

Video acquisition module 14 in the embodiment of Figure 3 includes video interface mezzanine card 34, shown in Figure 3A, which provides analog signal conditioning. Video interface mezzanine card 34 generally comprises multiplexer 32, 8-bit analog to digital converter 36, several 256 x 8 bit look-up tables such as table 38, all as shown in Figure 3. Multiplexer 32 can receive up input from up to four video sources, albeit with some degradation in performance, in either RS-170 or RS-343 standard formatting at sampling rates up to 60 MHz. However, the number of video inputs to hardware design 10 is immaterial to the practice of the invention. Analog to digital converter 36 likewise converts data at rates up to 60 Mhz.

Video acquisition module 14 includes, in addition to video interface mezzanine card 34, frame memory 40, frame memory controller 42, timing controller 44, pixel controller 46, and advanced PCI bus interface 48. Frame memory 40 is a one Mbyte memory receiving image pixels in serial and outputting them in parallel (32 bit output) with a maximum resolution of either 1K x 1K or 2K x 512. Frame memory controller 42 provides memory refresh, shift register transfer cycles, standard memory read and write and page mode reads for frame memory 40. Timing controller 44 tracks video signal inputs and selects sync source and clock source, both internal and external, and generates a pixel clock with programmable phase delay synchronized to the horizontal sync. Pixel controller 46 provides programmable control of several image formatting functions including controlling horizontal and vertical holdoffs and extents, controlling memory shift clock, and reforming pixel data for storage in frame memory. (FIFO 45 shown in Figure 3A is not used in the particular embodiment illustrated.)

Still referring to Figure 3, video processing module 16 is preferably a Precision MX Video Engine, also available from PDI (PDI Part No. VA5010036/WA2118). Video processing module 16 includes digital signal processor ("DSP") 50, video random access memory ("VRAM") 52, PCI bus interface 49, memory controller 54, oscillator pixel clock generator 56, video interface palette 58, analog multiplexer 60 (shown in Figure 3C), and sync field erasable programmable logic device ("EPLD") 62 (also shown in Figure 3C). The Precision MX Video Engine is designed for use in Windows^{®}-based platforms.

DSP 50 in the illustrated embodiment is a multimedia video processor, preferably a Texas Instruments TMS320C80, 40 MHz digital signal processor. The structure and operation of the TMS320C80 are well known in the art and the structure is schematically illustrated in Figure 3B. As shown in Figure 3B, DSP 50 is a multi-processor DSP which includes on-chip memory 51, four parallel advanced DSPs 53, and a floating-point RISC master processor 55. DSP 50 also includes transfer controller 57 interfacing with external memory, VRAM 52 in this instance, and video controller 59 interfacing with video data and timing signals. DSP 50 receives video data via PCI bus interface 49 and processes the digitized video imagery which is then stored in VRAM 52. Note that VRAM 52 output to palette 58 is dual ported, which enables data transfer at maximum speeds regardless of how fast input imagery is captured by video acquisition module 14.

Figure 3C schematically illustrates the connections among oscillator pixel clock generator 56, video interface palette 58, analog multiplexer 60, sync EPLD 62, and VRAM 52. Pixel clock generator 56 is preferably an ISC1574 manufactured by Integrated Circuit Systems, Inc., which is a high performance, monolithic, phase-locked loop, frequency synthesizer schematically illustrated more fully in Figure 3D. Pixel clock generator 56 provides timing signals according to predetermined resolution and refresh rates by dividing the system clock and outputting the result to video interface palette 58.

Video interface palette 58 is preferably a TVP3020 available from Texas Instruments and is schematically illustrated more fully in Figure 3E. Palette 58 interfaces directly with DSP 50 and VRAM 52 and receives digitized data from VRAM 52 on sixty-four bit wide bus 62. Palette 58 receives the digitized video imagery and generates analog video signals R, G, B, horizontal sync ("Hsync") and vertical sync ("Vsync") therefrom. As shown in Figure 3, palette 58 outputs Hsync, Vsync, red ("R"), green ("G") and blue ("B") analog data to display device 22 via power conditioning module 20.

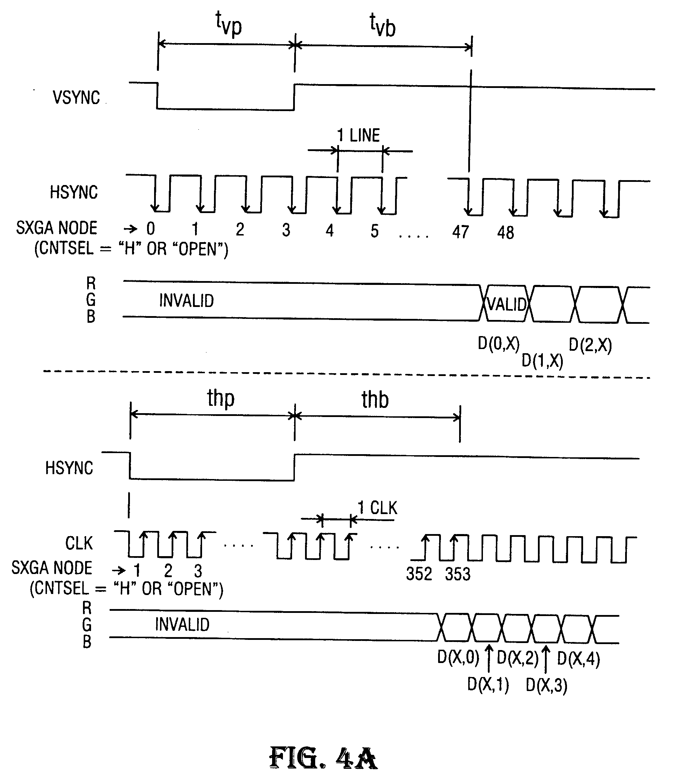

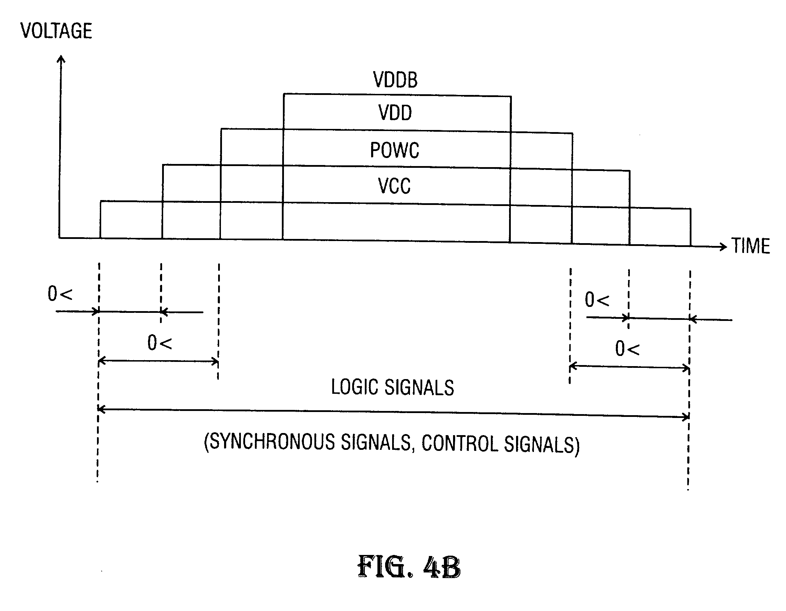

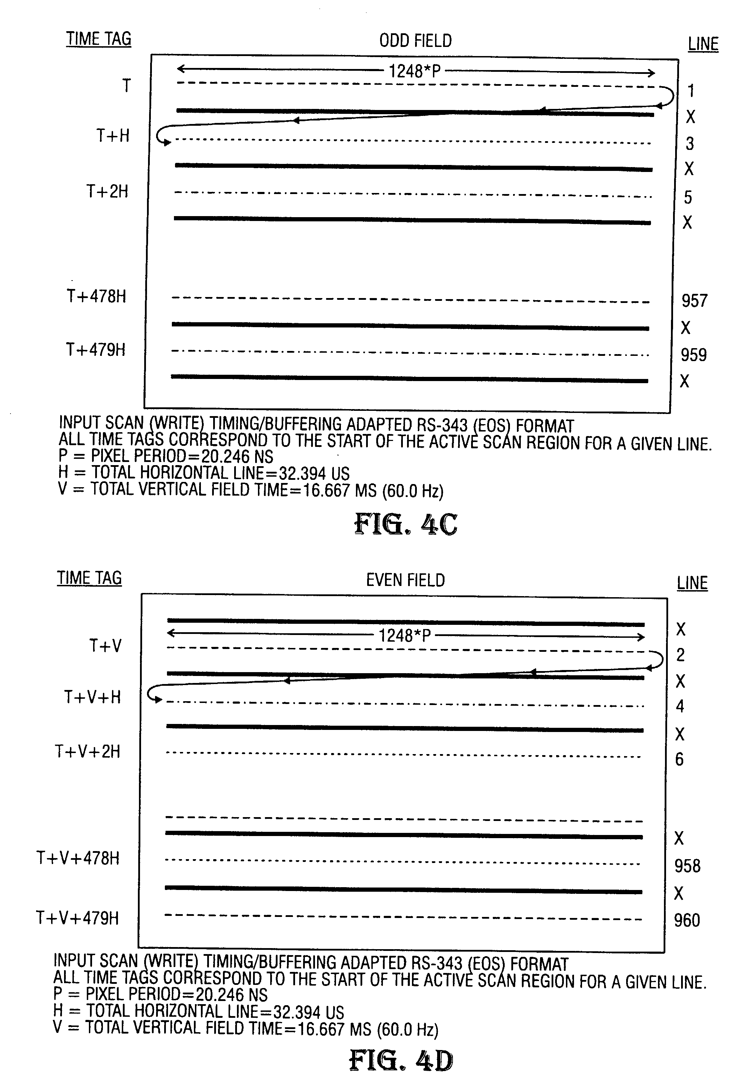

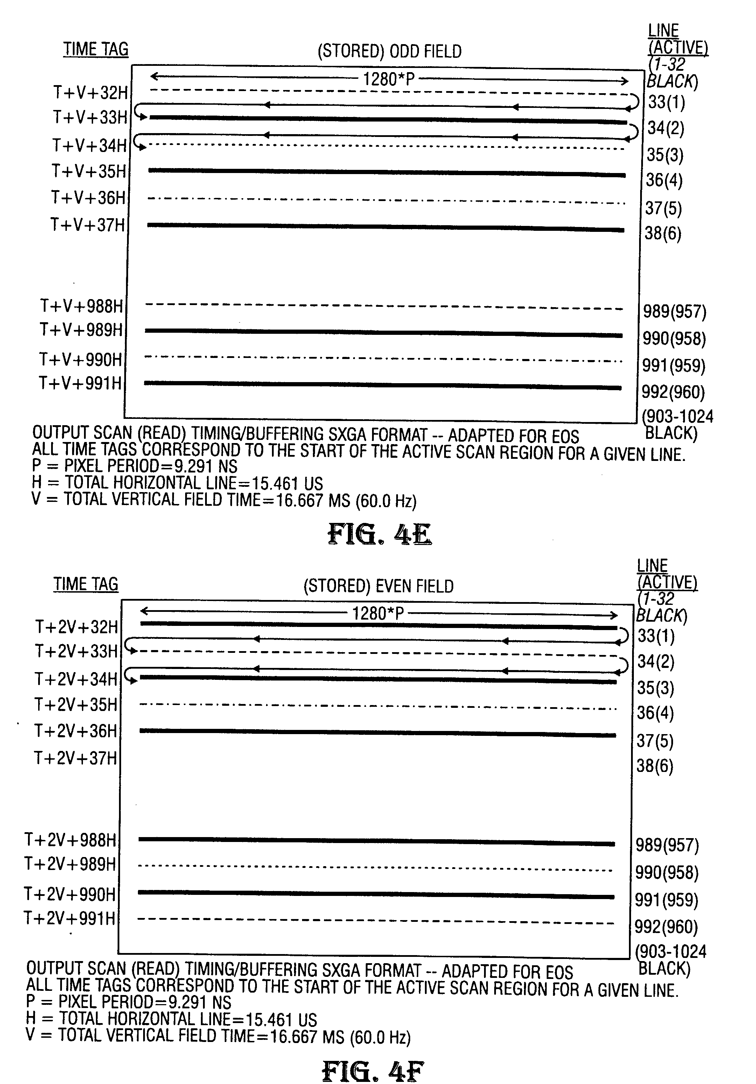

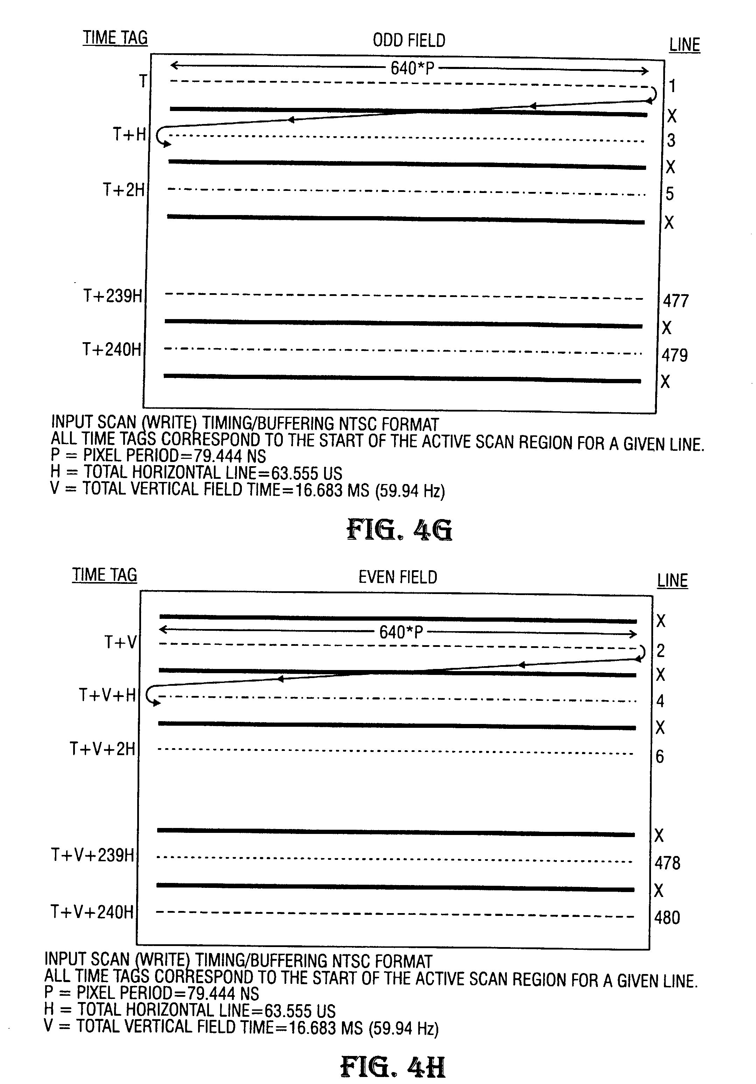

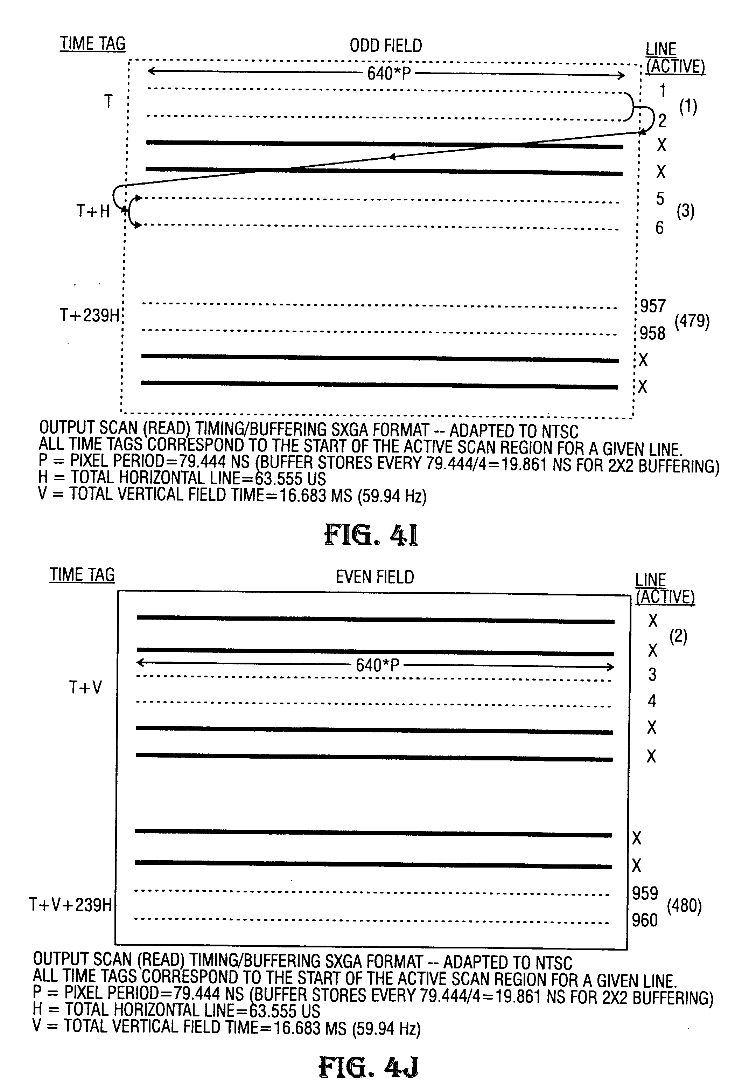

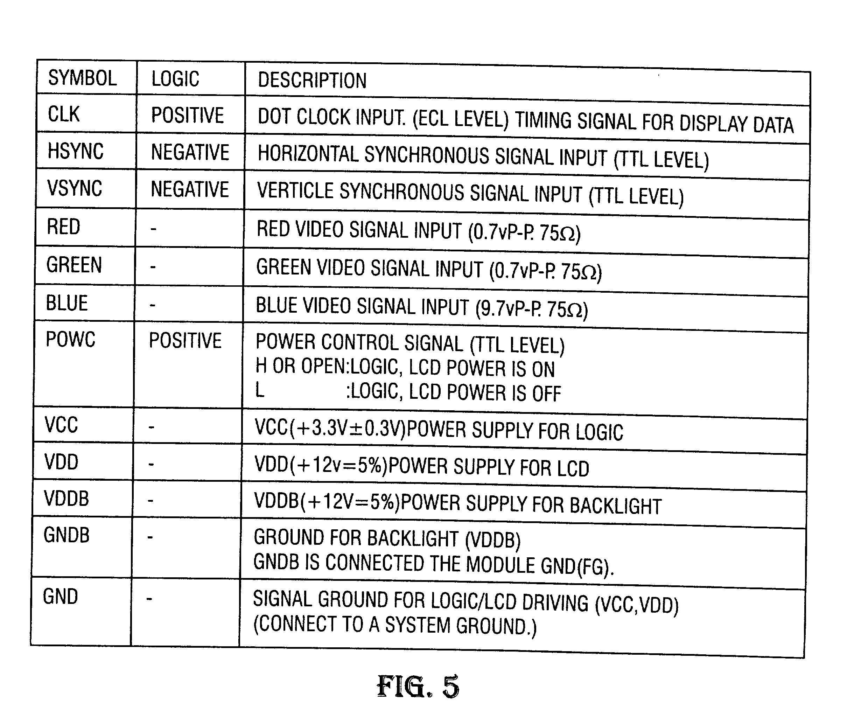

Power conditioning module 20 receives power from an external source through line 64 and provides power to display device 22, overall brightness control, RGB brightness control, and over current protection. Input power in one particular embodiment ranges from 19-32 V dc, typically 24 V dc, at 115 Watts. Figure 5 below contains a list of signals generated by power conditioning module 20 and Figure 4B is a timing diagram for select ones of those signals. Power conditioning module 20 also inputs signals to display device 22 as set forth below.

Processor motherboard 18 hosts, in this particular embodiment, an Intel^{®} 100 Mhz Pentium^{®} Processor with a PCI chip set including an Intel^{®} Triton^{®} chip set and a Plug and Play PCI BIOS (Rev. 2.0 or higher). Motherboard 18 also includes 16 Mbytes of RAM (with 256K pipeline burst) and interfaces with a 100 Mbyte hard disk drive. Motherboard 18 works under the Windows^{®} NT operating system, thus requiring video acquisition module 14 and video processing module 16 to incorporate Windows^{®} NT device drivers. The processor of motherboard 18 loads software as required into video acquisition module 14 and video processing module 16 and supports bus transactions.

Processor motherboard 18, video acquisition module 14, and video processing module 16 all interface via PCI bus 24. Video acquisition module 14 includes PCI bus interface 48 that provides advanced management of PCI bus functions and includes control of interrupts, slave mode reads and writes, and bus master arbitration. Video acquisition module 14 operates in a bus mastering mode. Video processing module 16 includes PCI bus interface 49, schematically illustrated in Figure 3G. PCI bus interface 49 supports both slave and bus mastering cycles and is burst capable in both modes but operates only in a slave mode in the particular embodiment illustrated.

Note that, although the embodiment of Figure 3 employs PDI products for video acquisition module 14 and video processing module 16, products from other manufacturers may be suitable. For instance, if RS-170 video is acceptable, it is believed that the following products may be suitable in some circumstances for implementing the present invention:
(1) the Alacron FT-C80 Processor Board and FT-VI-8A Image Acquisition module;
(2) the DY4 SVME/DMV-783 Multimedia Graphics Controller with 50 Mhz DSP, minimum 2 Mbyte video RAM, and frame grabber daughter card options; and
(3) the Spectrum Signal Processing Aurora series PCI/C80 Applications Board and PCI/C80-VIM/24 Acquisition Module.
The list is not exhaustive and each of the above configurations may require a suitable backplane bus host processor module to support initialization and software loading.

Display device 22 is preferably an NEC type no. NL128102AC20-07 liquid crystal display ("LCD") available from Nippon Electronics Corporation (NEC Part No. 128002AC20-07) schematically illustrated more fully in Figure 3F. In the particular embodiment illustrated, display device 22 is an SXGA display, having a resolution of 1280 x 1024, a pixel frequency of 107.63 Mhz, a horizontal scanning frequency of 64.68 Khz, and a vertical frequency of 60 Hz. Note, however, that these timing parameters are governed by particular implementations and may have to be adjusted in order to meet the necessary synchronization requirements. More particularly, data input must be either vertically synchronized one input field for every one display frame or horizontally synchronized one input line for every two display lines.

The NEC type no. NL128102AC20-07 display device is a full color, analog, progressive scan device with an a-Si TFT active matrix driver. However, the invention may be implemented with any kind of progressive scan display device. In fact, the particular embodiment of hardware design 10 illustrated in the drawings handles only input monochrome video data. Accordingly, the practice of the invention is not limited to either analog or digital displays, monochrome or color displays, or any particular kind of driver.

Display device 22 receives, as mentioned above, as inputs from video display module 16 via power conditioning module 20 analog video inputs (R, G, and B) and timing signals (Hsync, Vsync, and the pixel clock signal CLK) as well as a series of display control signals generated by power conditioning module 20. In other embodiments, display device 22 may also receive other display control signals that are left to their default values in the particular embodiment illustrated.

Certain flat panel display technologies (e.g., liquid crystal display, or LCD) function by individually addressable pixel apertures, or cells, being polarized to the degree defined by the amplitude of the signal applied to each cell control element. For LCD displays, the brightness of each pixel is a function of a sum of the fraction of incident light that is reflected from each cell pixel element and the amount of display backlight that is transmitted through each cell pixel element. The degree of external light reflection and backlight transmission is changed in tandem by the same physical mechanism.

For LCD displays, a cell polarization setting once received is held constant until it is replaced by a new setting during the next image frame scan. The context of CRT phosphor persistence is not directly applicable in this case. However, for LCD display cells the characteristic of cell response time can be applied in a similar manner. Response time is the term describing the time that it takes for an LCD cell to switch from one aperture polarization to another once a new cell aperture setting is loaded. The greater the change, the longer the response time that is required.

It is useful to compare the CRT display case with the LCD display case in this context. Steady-state fully black pixel phosphors on a CRT are effectively skipped over by the ion gun and not excited at all, just as the inactive interlaced video lines are skipped over during the scanning process. Steady-state fully white phosphors on a CRT are energized to the maximum level available, then immediately begin decaying over time until re-energized by the next pass of the ion gun. In a similar manner, steady-state fully black pixel cells on an LCD display remain set at the fully closed/absorptive level once commanded, then are retained in that same state by the subsequent black-line interleave pass. Steady-state fully white pixel cells on an LCD display will be commanded to the fully open/reflective state, but will then be commanded to the fully closed/absorptive state during the black-line interleave pass. Cells set or phosphors excited to levels somewhere between full white and full black would be cycled in a similar manner. The influence of the cell response time on this recursive cell polarization process approximates the effects of CRT phosphor persistence closely enough such that the full original image resolution is retained and no spatial or temporal image artifacts are perceived by the viewer in the resulting image.

Note that by using this technique, the full white level of the image can be no greater than approximately half of the full white luminance performance level of the LCD display device. Cycling each line of video information to black 50% of the time decreases the average display luminance correspondingly. Recent advances in LCD display efficiency and backlight performance now provide sufficient luminance margin for satisfactory image quality to be achieved using this method with LCD displays.

Returning to Figure 3, video acquisition module 14 receives video imagery input from source 12 in either RS-170 or RS-343 standard formatting. These standards are well known in the art and, as well known in the art, are capable of many implementations. In the particular embodiment illustrated, RS-170 requires 1316 x 480 resolution, 25.060 Mhz pixel frequency, 15.75 kHz horizontal scanning frequency, 60 Hz vertical frequency per field, and 30 Hz vertical frequency per frame. RS-343 requires 1248 x 960 resolution, 49.392 Mhz pixel frequency, 30.870 Khz horizontal scanning frequency, 60 Hz vertical frequency per field, and 30 Hz vertical scanning frequency per frame. However, other embodiments may require other implementations of the RS-170 or RS-343 standards and may even employ completely different video display standards.

Video acquisition module 14 then samples the input video imagery, converts the imagery from analog to digital form, and then collects and transfers digitized video imagery to PCI bus 24. Technically, to retain full image resolution, the sampling rate must be no less than the inherent pixel rate of the video imagery from video source 12. This rate will be predetermined by the selected display standard and, for the particular embodiment illustrated using RS-343 standard input, the sampling rate is 49.392 Mhz.

Video acquisition module 14 buffers digitized input until a complete set, a full field in the particular embodiment illustrated, is acquired, whereupon the complete set is output to PCI bus 24 via PCI bus interface 48. Video acquisition module 14 simultaneously begins buffering the next set of imagery received and digitized. Output to PCI bus 24 from video acquisition board 14 is thus synchronized with the capture of input video imagery. More particularly, data input must be either vertically synchronized one input field for every one output frame or horizontally synchronized one input line for every two output lines. PCI bus interface runs at 33 Mhz and allows fast transfer of data over PCI bus 24 at speeds of up to 60 Mbytes/sec (*i.e.,* 1 Mbyte/60 Hz field) using burst transfers and one wait state for PCI bus 24. Thus, because of the latency in buffering the digitized input video, PCI bus 24 is easily capable of transferring the 0.6 Mbyte previous field image buffer data to video processing module 16 in the time available.

Video processing module 16 receives digitized video imagery from video acquisition module 14 via PCI bus 24 and PCI bus interface 49, which video imagery is then processed by DSP 50 and stored in VRAM 52. Digitized imagery data is received from video acquisition module 14 in segments and is temporarily buffered in a first-in, first-out queue (not shown) in PCI bus interface 49. When the queue is nearly filled with a complete set of digitized data, PCI bus interface 49 interrupts DSP 50. DSP 50 halts its current processing to empty the queue and transfer the digitized data segment to VRAM 52. Data transfer between the queue and VRAM 52 is at a maximum 40 Mbyte/second rate, faster than the 36 million pixel/second source video rate. This technique imposes an additional latency step providing additional flexibility in timing processing.

DSP 50 stores odd and even fields of data in VRAM 52 in two separate odd/even buffer memory blocks and black line data is stored by line interleaved with the odd and even fields of active data in VRAM 52. In the particular embodiment disclosed, the black line data is stored in the odd and even buffer memory blocks during system initialization. Active video data is then continually written to the respective memory blocks on the active line locations as it is received, writing over any active data previously stored. Black line data need not be written to VRAM 52 once stored during system initialization. Thus, in this particular embodiment, black line data is interleaved at the time the odd and even fields of active video data is buffered in video processing module 16.

Display device 22 in the particular embodiment illustrated requires a pixel frequency of 107.63 Mhz in a RS-343 standard display to maintain 60 Hz, 1:1 field synchronization. However, other embodiments may require different pixel rates in other display standards to maintain the necessary synchronization. As one of ordinary skill in the art will appreciate, video data must be displayed at twice the rate it is acquired by video acquisition board 14 in order to transform each interlaced input line to a corresponding progressive scan output line pair while preserving the source image resolution. More particularly, data input must be either vertically synchronized one input field for every one display frame or horizontally synchronized one input line for every two display lines. The particular illustrated embodiment processes sets of data by field, which provides additional flexibility over processing sets of data by line.

The present invention displays interlaced video on a progressive scan display by use of a pseudo-interlacing methodology. The input interlaced video data is digitized by display pixel and stored by field. Once an input source field image is fully stored, as the next image is being stored the first stored image is transferred to the display device. Consistent with the progressive scan format of the display, as the buffered image data is transferred to the display line-by-line from top to bottom, active line data from the stored image buffer is alternated line-by-line with generation of a black or zero-value amplitude video line. As such, black line video is generated for all of the lines corresponding to the inactive source video field as they are encountered during the display scan process. By this method, black odd field lines are interleaved with the stored even field lines to form a complete progressive scan image, then black even field lines are interleaved with the subsequent stored odd field lines to form the next progressive scan image. By this method, each video line is continuously cycled between active video and black level to simulate the effect of CRT phosphor decay.

This approach requires a high-speed video processing and transfer pipeline for successful realization. Continuous buffering of one to two fields of source image data is required, as is 1:1 synchronization by field of the output frame timing to the input field timing to avoid artifacts induced by source fields being dropped or displayed twice in succession. To process data sets by line, continuous buffering of two lines of source image data is required, as is 2:1 synchronization by line of the output video timing, *i.e.*, one line of active video plus one black line output *versus* one line of active video input. Also, regardless of whether processed by line or by field, each full frame of pseudo-interlaced pixel data must be transferred to the display at close to twice the pixel rate the source video data was originally stored. However, it is preferred to process imagery by field rather than by line because the timing requirements are more lax.

Numerous specific details are set forth in the above detailed description in order to provide a thorough understanding of the present invention. However, one of ordinary skill in the art having the benefit of this disclosure will understand that the present invention may be practiced without many of the details. One of ordinary skill will understand that many such details pertain only to a particular embodiment and that such details will be necessary or useful depending on the particular embodiment being employed. Conversely, in other instances, well known details have not been described in detail for the sake of clarity so as not to obscure the invention. It will be appreciated that supplying such details would be a routine undertaking for those of ordinary skill in the art, even if a complex and time-consuming task, given the benefit of this disclosure.

The present invention may be used in a large variety of applications including medical, scientific, military, and industrial applications. The particular embodiments disclosed above are illustrative only as the invention may be modified and practiced in different but equivalent manners apparent to those skilled in the art having the benefit of the teachings herein. Furthermore, no limitations are intended to the details of construction or design herein shown other than as descried in the claims below. For instance, as will be appreciated by those in the art, in response to the video standard used, *e.g*, RS-170, RS-343, NTSC, *etc.*, and the characteristics of the display will require some slight modifications in timing as Figures 4E-4G illustrate. It is therefore evident that the particular embodiments disclosed above may be altered or modified and all such variations are considered within the scope and spirit of the invention. Accordingly, the protection sought in this application is as set forth in the claims below.

## Claims

1. A method for displaying video imagery including video data and black line data on a progressive scan display device, the method comprising:
interleaving black line data with at least one of first set and a second set of interlaced video data;
displaying the first set of interlaced video data while buffering the second set of interlaced video data;
displaying the second set of interlaced video data; and
displaying the black line data with the set of interlaced video data with which it is interleaved.

2. A method for displaying a first and a second set of video imagery including video data and black line data on a progressive scan display device, the method omprising:
buffering the second set of interlaced video data;
displaying the first set of interlaced video data while buffering the second set of interlaced video data;
displaying the second set of interlaced video data;
interleaving black line data with at least one of the first and second sets of interlaced video data; and
displaying the interleaved black line data.

3. A method for displaying video imagery including video data and black line data on a progressive scan display device, the method comprising:
buffering a first set of interlaced video data;
buffering a second set of interlaced video data;
storing black line data;
displaying the first set of interlaced video data while buffering the second set of interlaced video data;
displaying the second set of interlaced video data;
interleaving the stored black line data with at least one of the first and second sets of interlaced video data; and
displaying the interleaved black line data.

4. A method for displaying video imagery including video data and black line data on a progressive scan display device, the method comprising:
displaying a first set of interlaced video data while buffering a second set of interlaced video data;
interleaving black line data with the first set of interlaced video data as the first set of interlaced video data is displayed.
displaying the second set of interlaced video data;
interleaving black line data with the second set of interlaced video; and
displaying the interleaved black line data.

5. A method for displaying video imagery including video data and black line data on a progressive scan display device, the method comprising:
storing at least one of a pixel, a line, and a set of black line data;
buffering a first set of active, interlaced video data;
interleaving black line data with the first set of active, interlaced video data as the first set of active, interlaced video data is buffered;
buffering a second set of active, interlaced video data;
interleaving black line data with the second set of active, interlaced video data as the second set of active, interlaced video data is buffered;
displaying the first set of active, interlaced video data and interleaved black line data while buffering the second set of active, interlaced video data; and
displaying the second set of active, interlaced video data interleaved with black line data.

6. The method of claims 1-5, wherein the method is iterated to display multiple video images.

7. The method of claims 1-5, wherein the progressive scan display device is at least one of a cathode ray tube device and a flat panel display device.

8. The method of claim 7, wherein the progressive scan display device is a liquid crystal display.

9. The method of claims 1 or 2, including storing the black line data.

10. The method of claims 3, 4 or 9, wherein the stored black line data includes a single pixel of data.

11. The method of claim 10, wherein the stored black line data includes a line of data.

12. The method of claim 11, wherein the stored black line data includes a set of data.

13. The method of claims 1, 2 or 4, including buffering the first set of interlaced video data before display.

14. The method of claims 3, 5 or 13, wherein the first set is buffered at least one of by line and by field.

15. The method of claims 1-5, wherein the second set is buffered at least one of by line and by field.

16. The method of claims 1-4, wherein the black line data is interleaved at least one of when the video data is buffered and when the video data is displayed.

17. The method of claims 1-5, wherein the first and second sets of data comprise at least one of a line of active video data and a. field of active video data.
